# EUROPEAN PATENT APPLICATION

(11) **EP 4 502 857 A1**
(43) Date of publication of application: **05.02.2025**
(21) Application number: 23790973.4
(22) Date of filing: 22.03.2023
(51) Int. Cl.: G06F 30/27, B21D 31/00, G06F 113/10

(54) **DOUBLE-POINT INCREMENTAL FORMING MANUFACTURING METHOD AND APPARATUS BASED ON DEEP REINFORCEMENT LEARNING**

(30) Priority: 19.04.2022 CN 202210410301
(71) Applicant: Hankaisi Intelligent Technology Co., Ltd., Guizhou, Guiyang, Guizhou 550000 (CN)
(72) Inventor: CUI, Qiang, Guiyang, Guizhou 550000 (CN); HE, Mengxi, Guiyang, Guizhou 550000 (CN); HE, Sizhong, Guiyang, Guizhou 550000 (CN); YANG, Daoqian, Guiyang, Guizhou 550000 (CN); LI, Jiangshan, Guiyang, Guizhou 550000 (CN); YU, Chuan, Guiyang, Guizhou 550000 (CN); PAWAR, Siddharth Suhas, Pune, Maharashtra 411001 (IN)
(74) Representative: Range, Christopher William
(86) International application number: PCT/CN2023/083029
(87) International publication number: WO 2023/202312

(57) **Abstract**

The present invention provides a double-point incremental forming manufacturing method and apparatus based on deep reinforcement learning. The method comprises: obtaining a three-dimensional model to be manufactured, performing layering to obtain a plurality of main working paths and a plurality of candidate supporting paths, and selecting an initial current main working path and a current supporting path; respectively cyclically controlling, according to the current main working path and the selected current supporting path, mechanical arms of a master robot and a slave robot for incremental forming in an actual application environment, to obtain a formed curved surface; and taking a deviation value of the formed curved surface and a target curved surface as a state vector, applying a pre-trained deep reinforcement learning model for reinforcement learning, cyclically outputting a supporting path corresponding to the next main working path, and cyclically updating the current main working path and the current supporting path according to the next main working path and the supporting path corresponding to the next main working path until incremental forming of the three-dimensional model is completed. According to the present invention, the support strategy of the slave robot can be adjusted, the flexibility is high, and the forming precision is high.

## Description

### Technical Field

The present invention belongs to the technical field of additive manufacturing, and particularly relates to a double-point incremental forming manufacturing method and apparatus based on deep reinforcement learning.

### Background Art

Incremental forming is a flexible manufacturing technique, which can work out target parts without a special mold. Incremental forming uses a hemispherical tool attached to a robot arm or CNC (Computerized Numerical Control) machine tool. The tool is moved along a pre-programmed path, and produces local plastic deformations on a metal sheet, thereby makes the metal sheet reach a desired shell shape. Double-point incremental forming uses two hemispherical forming tools to achieve local incremental deformation of material and obtain final formed parts. The principle of double-point incremental forming is that one side of a sheet blank is processed by a main tool head (forming head), while the other side of the sheet blank is supported by an auxiliary tool head (supporting head), and the auxiliary tool head follows moving trajectory of the main tool head. Such a double-point incremental forming method can further improve the formability of the sheet blank and effectively improve the dimensional accuracy of the formed parts. However, the existing double-point incremental forming method has many drawbacks, the supporting strategy of the auxiliary tool head is fixed in the incremental forming process, and the forming result has low geometric accuracy and a small forming range, limiting wide industrial application of the method. At present, methods for improving the accuracy of incremental forming is mainly to measure spring-back value of the material for compensation, but it is difficult for these methods to achieve optimizations in forming control.

### Contents of the Invention

The present invention provides a double-point incremental forming manufacturing method and apparatus based on deep reinforcement learning, so as to solve the problems of a fixed supporting strategy of a slave robot and low forming accuracy in the prior art.

Based on the above object, examples of the present invention provide a double-point incremental forming manufacturing method based on deep reinforcement learning, which comprises: acquiring a three-dimensional model to be manufactured, layering the three-dimensional model to obtain a plurality of main working paths and a plurality of candidate supporting paths corresponding to each of the main working paths, and selecting one main working path and one supporting path corresponding to the selected main working path as an initial current main working path and a current supporting path; cyclically controlling robot arms of a master robot and a slave robot for incremental forming in an actual application environment respectively, according to the current main working path and the selected current supporting path, to acquire a formed curved surface corresponding to the current main working path; and taking a deviation value of the formed curved surface from a target curved surface as a state vector, applying a pre-trained deep reinforcement learning model for reinforcement learning of a supporting strategy, cyclically outputting a supporting path corresponding to the next main working path, and cyclically updating the current main working path and the current supporting path according to the next main working path and the supporting path corresponding to the next main working path till incremental forming of the three-dimensional model is completed.

Optionally, the step of acquiring a three-dimensional model to be manufactured and layering the three-dimensional model to obtain a plurality of main working paths and a plurality of candidate supporting paths corresponding to each of the main working paths comprises: acquiring a three-dimensional model to be manufactured, layering the three-dimensional model in the forming direction according to a preset layer thickness by applying an offset function along the curved surface, and acquiring a first preset number of curve paths; dividing a second preset number of discrete points at a preset point interval for each of the curve paths, and generating a main working path corresponding to the curve path according to the discrete points; acquiring a plurality of the candidate supporting paths corresponding to the main working path according to a plurality of supporting strategies for each of the main working path respectively, the supporting strategy is one of a global supporting strategy, a local peripheral supporting strategy, a local front supporting strategy and a following supporting strategy.

Optionally, before the step of controlling the robot arms for incremental forming in real world according to the current main working path and the selected supporting path to acquire a formed curved surface corresponding to the current main working path, the method further comprises: constructing a digital simulation environment that matches the actual application environment of the three-dimensional model to be manufactured in Grasshopper; and simulating the three-dimensional model in the digital simulation environment, and training the deep reinforcement learning model in conjunction with simulation result, to obtain the pre-trained deep reinforcement learning model.

Optionally, the step of simulating the three-dimensional model in the digital simulation environment and training the deep reinforcement learning model in conjunction with simulation result to obtain the pre-trained deep reinforcement learning model comprises: selecting an initial main working path as a current simulated main working path according to forming direction, and randomly selecting one of a plurality of candidate supporting paths as an initial current simulated supporting path according to the current simulated main working path; applying the digital simulation environment for simulated forming according to the current simulated main working path and the current simulated supporting path, to obtain a simulated formed curved surface corresponding to the current simulated main working path and a spring-back value of the simulated formed curved surface; taking a deviation value of the simulated formed curved surface from the target curved surface as a state vector, and inputting it into the deep reinforcement learning model for reinforcement learning of the supporting strategy, and updating a simulated supporting path corresponding to the next simulated main working path and a current return value in conjunction with the spring-back value of the simulated formed curved surface; cyclically updating the current simulated main working path and the current simulated supporting path respectively according to the next simulated main working path and the corresponding simulated supporting path, cyclically controlling the robot arms to perform incremental forming according to the updated current simulated main working path and the updated current simulated supporting path, and cyclically updating the simulated formed curved surface; and cyclically updating the state vector according to the updated simulated formed curved surface and the target curved surface, and adjusting the model parameters of the deep reinforcement learning model according to the updated state vector and the return value till a convergence condition of the deep reinforcement learning model is met.

Optionally, the step of applying the digital simulation environment for simulated forming according to the current simulated main working path and the current simulated supporting path to obtain a simulated formed curved surface corresponding to the current simulated main working path and a spring-back value of the simulated formed curved surface comprises: converting coordinates and directions of discrete points of the current simulated main working path and the current simulated supporting path into robot motion instructions according to robotic syntax rules; and building a simulation model of sheet deformation with simulation software, performing simulated forming according to the robot motion instructions, and returning a simulated formed curved surface corresponding to the current simulated main working path and a spring-back value of the simulated formed curved surface.

Optionally, the step of taking a deviation value of the simulated formed curved surface from the target curved surface as a state vector, and inputting it into the deep reinforcement learning model for reinforcement learning of the supporting strategy, and updating a simulated supporting path corresponding to the next simulated main working path and a current return value in conjunction with the spring-back value of the simulated formed curved surface comprises: acquiring second reference points on the simulated formed curved surface corresponding to first reference points on the target curved surface respectively, and calculating error values of the second reference points from corresponding first reference points to form the state vector; inputting the state vector into the deep reinforcement learning model for reinforcement learning of the supporting strategy, and outputting a simulated supporting path corresponding to the next simulated main working path; and updating the current return value according to the simulated formed curved surface and the spring-back value of the simulated formed curved surface.

Optionally, the step of acquiring the current return value according to the simulated formed curved surface and the spring-back value of the simulated formed curved surface comprises: setting an initial value of the current return value to 0, and controlling the current return value to be decreased by a first preset value if the spring-back value of the simulated formed curved surface is greater than or equal to a reference value; controlling the current return value to be increased by the first preset value if the spring-back value of the simulated formed curved surface is smaller than the reference value; and controlling the current return value to be a second preset value if the forming of the simulated formed curved surface fails.

Based on the same inventive concept, examples of the present invention further provide a double-point incremental forming manufacturing apparatus based on deep reinforcement learning, which comprises: a path acquisition unit, for acquiring a three-dimensional model to be manufactured, layering the three-dimensional model to obtain a plurality of main working paths and a plurality of candidate supporting paths corresponding to each of the main working paths, and selecting an initial main working path and one supporting path corresponding to the initial main working path as an initial current main working path and a current supporting path according to a forming direction; an incremental forming unit, for cyclically controlling robot arms of a master robot and a slave robot for incremental forming in an actual application environment respectively, according to the current main working path and the current supporting path, to acquire a formed curved surface corresponding to the current main working path; and a reinforcement learning unit, for taking a deviation value of the formed curved surface from a target curved surface as a state vector, applying a pre-trained deep reinforcement learning model for reinforcement learning of a supporting strategy, cyclically outputting a supporting path corresponding to the next main working path, and cyclically updating the current main working path and the current supporting path according to the next main working path and the supporting path corresponding to the next main working path till incremental forming of the three-dimensional model is completed.

Based on the same inventive concept, examples of the present invention further provide an electronic device, which comprises a memory unit, a processor and a computer program stored in the memory unit and executable on the processor, wherein the processor implements the aforementioned method when it executes the program.

Based on the same inventive concept, examples of the present invention further provides a computer storage medium which stores at least one executable instruction, which instructs a processor to execute the aforementioned method.

The present invention has the following beneficial effects: it can be seen from the above description that examples of the present invention provide double-point incremental forming manufacturing method and apparatus based on deep reinforcement learning. The method comprises: acquiring a three-dimensional model to be manufactured, layering the three-dimensional model to obtain a plurality of main working paths and a plurality of candidate supporting paths corresponding to each of the main working paths, and selecting an initial main working path and one supporting path corresponding to the initial main working path as an initial current main working path and a current supporting path according to forming direction; cyclically controlling robot arms of a master robot and a slave robot for incremental forming in an actual application environment respectively according to the current main working path and the selected current supporting path, to acquire a formed curved surface corresponding to the current main working path; and taking a deviation value of the formed curved surface from a target curved surface as a state vector, applying a pre-trained deep reinforcement learning model for reinforcement learning of a supporting strategy, cyclically outputting a supporting path corresponding to the next main working path, and cyclically updating the current main working path and the current supporting path according to the next main working path and the supporting path corresponding to the next main working path till incremental forming of the three-dimensional model is completed. The present invention supports adjustments of the supporting strategy of a slave robot, and has high flexibility and high forming accuracy.

### Description of Drawings

To illustrate the technical scheme in the examples of the present invention or in the prior art more clearly, the accompanying drawings required for the description of the examples or the prior art will be introduced below briefly. Apparently, the accompanying drawings described below only illustrate some examples of the present invention. Those having ordinary skills in the art can obtain other drawings on the basis of these drawings without expending any creative labor.
Fig. 1 is a schematic flowchart of a double-point incremental forming manufacturing method based on deep reinforcement learning in an example of the present invention;
Fig. 2 is a schematic diagram of a global supporting strategy in an example of the present invention;
Fig. 3 is a schematic diagram of a local front supporting strategy in an example of the present invention;
Fig. 4 is a schematic diagram of a following supporting strategy in an example of the present invention;
Fig. 5 is a schematic diagram of a local peripheral supporting strategy in an example of the present invention;
Fig. 6 is a schematic diagram of double-point incremental forming in an example of the present invention;
Fig. 7 is a schematic diagram of a formed curved surface in an example of the present invention;
Fig. 8 is a schematic structural diagram of a double-point incremental forming manufacturing apparatus based on deep reinforcement learning in an example of the present invention; and
Fig. 9 is a schematic diagram of an electronic device in an example of the present invention.

### Embodiments

For better and clearer understanding of the object, technical scheme and advantages of the present invention, the present disclosure will be further detailed below in conjunction with specific examples with reference to the accompanying drawings.

It should be noted that, unless otherwise defined, the technical terms or scientific terms used in the examples of the present invention should have their ordinary meanings as understood by those having ordinary skills in the art to which this disclosure belongs. The words "first", "second" and the like used in the examples of the present invention do not indicate any order, quantity or importance, but are only used to distinguish constituent parts. Words such as "comprise" or "include" or their variants mean that the elements or objects appearing before the word encompass elements or objects listed after the word and their equivalents, without excluding other elements or objects. Words such as "connect" or "interconnect" or their variants are not limited to physical or mechanical connections, but may further include electrical connections, no matter whether such connections are direct ones or indirect ones. Words such as 'top", "bottom", "left", "right" and the likes are only used to indicate a relative positional relationship, which may vary accordingly with the variation of the absolute positions of the described objects.

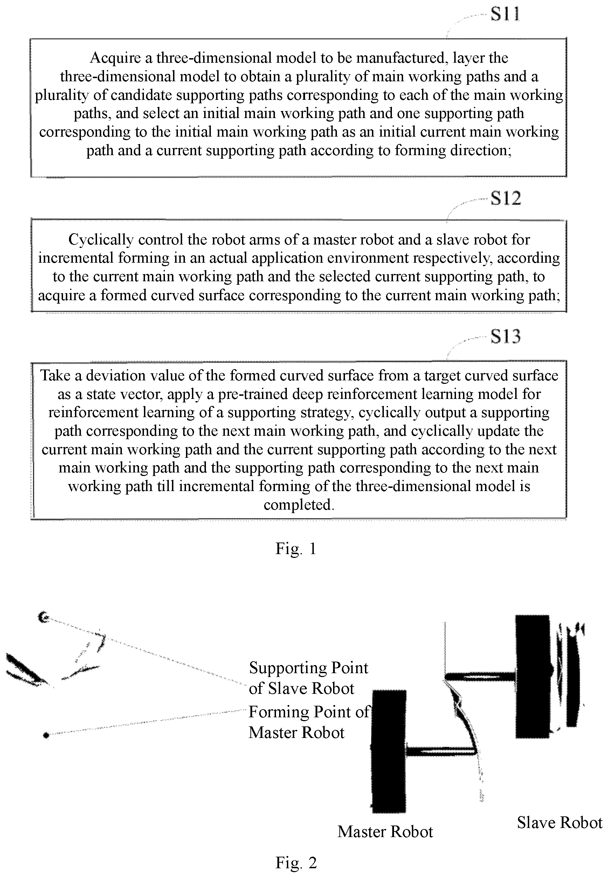

In an embodiment, the present invention provides a double-point incremental forming manufacturing method based on deep reinforcement learning. As shown in Fig. 1, the double-point incremental forming manufacturing method based on deep reinforcement learning comprises:
step S11: acquiring a three-dimensional model to be manufactured, layering the three-dimensional model to obtain a plurality of main working paths and a plurality of candidate supporting paths corresponding to each of the main working paths, and selecting an initial main working path and one supporting path corresponding to the initial main working path as an initial current main working path and a current supporting path according to forming direction.

In the examples of the present invention, a three-dimensional curved surface model to be manufactured is imported into a Rhino-based Grasshopper programming environment. In the step S11, optionally, at first, a three-dimensional model to be manufactured is acquired, the three-dimensional model is layered in forming direction according to a preset layer thickness by applying an offset-on-curved-surface function (Offset on surface), and a first preset number of curve paths are acquired, wherein, the preset layer thickness depends on the size of a forming tool head of a master robot, and is usually in a range of 0.5-2 mm. The forming direction may be along the x-axis direction; of course, it may be other direction, and there is no restriction on it. The first preset number is determined by the preset layer thickness and the size of the three-dimensional model. The smaller the preset layer thickness is and the bigger the three-dimensional model is, the greater the first preset number will be. The curve path is a 2D curve path.

Then, for each of the curve path, a second preset number of discrete points are divided at a preset point interval, and a main working path corresponding to the curve path is generated according to the discrete points. The preset point interval may be set as required, and is usually within a range of 1-3 mm. The second preset number is determined by the preset point interval and the size of the curve path. A series of planes are established in a tangent plane direction of the curved surface according to each discrete point, the center point of the plane is the moving position of the forming tool head, and the Z axis of the plane is the forming direction of the forming tool head. Each discrete point serves as a forming path point, and a combination of the moving position and the forming direction of the corresponding forming tool head at each discrete point on any one curve path constitutes one main working path.

Finally, for each main working path, a plurality of candidate supporting paths corresponding to the main working path are acquired according to a plurality of supporting strategies respectively, wherein the supporting strategy is one of a global supporting strategy, a local peripheral supporting strategy, a local front supporting strategy and a following supporting strategy.

According to the global supporting strategy, the outer contour of the forming area is shifted by a first preset distance to generate a global supporting curve, and the forming path points are mapped to the global supporting curve to generate a global supporting path. The first preset distance may be set as required, and is preferably set to the radius of the forming tool head. As shown in Fig. 2, the supporting tool head is moved by the slave robot along the boundary of the part.

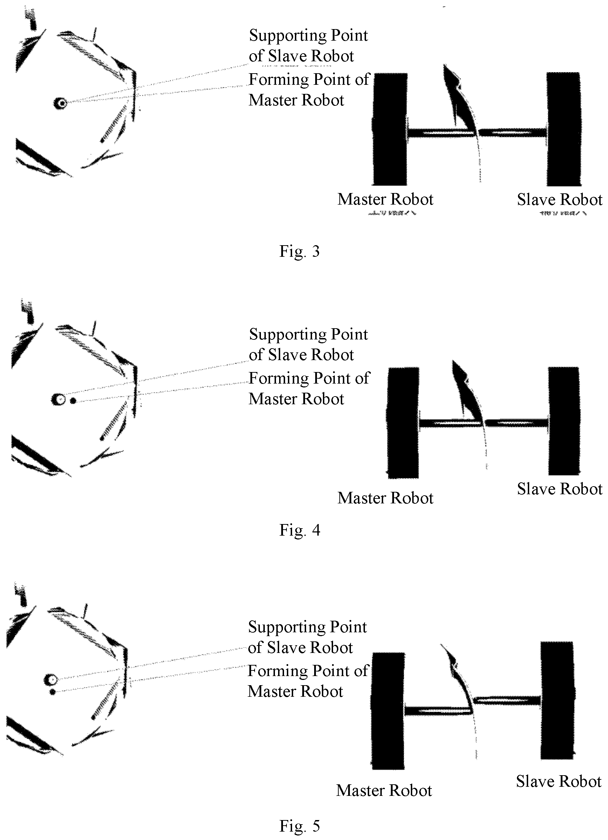

According to the local front supporting strategy, the main working path of the forming area is mirrored with reference to the plane of the metal sheet surface, and the plane of the forming path points is reversed, to generate a local front supporting path. As shown in Fig. 3, the supporting tool head of the slave robot directly follows the forming tool head of the master robot at the opposite side.

According to the following supporting strategy, the main working path of the forming area is mirrored with reference to the plane of the metal sheet surface, the plane of the forming path points is reversed, and the list of the forming path points is shifted forward by three items, to generate a following supporting path. As shown in Fig. 4, in the case of local front supporting, the supporting tool head of the slave robot lags behind the forming tool head of the master robot by a second preset distance. The second preset distance may be set as required, and is preferably set to the diameter of the forming tool head.

According to the local peripheral supporting strategy, the following supporting path is shifted backward by one layer, to generate a local peripheral supporting path. As shown in Fig. 5, the supporting tool head of the slave robot directly follows an opposite offset path of the forming tool head of the master robot, and one forming gap is formed between the forming tools.

The above four supporting strategies have their own advantages and disadvantages. The local supporting strategies (including the local front supporting strategy and the local peripheral supporting strategy) can enhance the forming of local details, but have greater overall errors; the global supporting strategy can unify the overall error, but has greater detail forming errors; the following supporting strategy can improve the surface quality of the forming. **In** the follow-up reinforcement learning environment, in order to perform four supporting strategies, the slave robot's behavior space selects one supporting path from the four candidate supporting paths.

An initial main working path is selected as an initial current main working path from a plurality of main working paths according to the forming direction, and one of the four candidate supporting paths corresponding to the initial main working path is randomly selected as an initial current supporting path.

Step S12: cyclically controlling robot arms of a master robot and a slave robot for incremental forming in an actual application environment respectively, according to the current main working path and the selected current supporting path, to acquire a formed curved surface corresponding to the current main working path;
In the examples of the present invention, the behavior space of the deep reinforcement learning model is a supporting strategy of the slave robot. The output of the deep reinforcement learning model includes four dimensions, and each dimension corresponds to one supporting path of the slave robot, namely a global supporting path, a local front supporting path, a local peripheral supporting path and a following supporting path. For example, the deep reinforcement learning model includes one input layer, three hidden layers and one output layer. The state vector inputted at the input layer includes a plurality of parameters, for example, 16 parameters S:{d1; d2; ...; d15; d16}; the three hidden layers respectively have 64 neurons, 32 neurons and 16 neurons; and the output layer outputs four parameters A: {g; 11; l2; f}, where g represents the probability that the supporting path corresponding to the next main working path is a global supporting path (global), l1 represents the probability that the supporting path corresponding to the next main working path is a local front supporting path (local1), l2 represents the probability that the supporting path corresponding to the next main working path is a local peripheral supporting path (local2), and f represents the probability that the supporting path corresponding to the next main working path is a following supporting path (follow). Among the four output parameters, only one parameter is not 0, while the rest parameters are 0, representing that the supporting path corresponding to the next main working path is the supporting path corresponding to the parameter that is not 0.

Before the step S12, a digital simulation environment that matches the actual application environment of the three-dimensional model to be manufactured is constructed in Grasshopper; and the three-dimensional model is simulated in the digital simulation environment, and the deep reinforcement learning model is trained in conjunction with a simulation result, to obtain the pre-trained deep reinforcement learning model.

In the digital simulation environment that matches the actual application environment, the coordinates and directions of the discrete points on each layer are converted into robot motion instructions according to robotic syntax rules (KRL). In a convex region, the slave robot is the support; in a concave region, the master robot is the support. A simulation model of sheet deformation is built by using LS Dyna simulation software, which communicates with the Grasshopper simulation environment via Socket, accepts the path data of the forming tool head and the supporting tool head, and returns the formed curved surface and the spring-back value of the formed curved surface.

During the training of the deep reinforcement learning model, at first, an initial main working path is selected as a current simulated main working path according to the forming direction, and one of a plurality of candidate supporting paths is randomly selected as an initial current simulated supporting path according to the current simulated main working path. Then, the digital simulation environment is applied for simulated forming according to the current simulated main working path and the current simulated supporting path, to obtain a simulated formed curved surface corresponding to the current simulated main working path and a spring-back value of the simulated formed curved surface. Specifically, the coordinates and directions of discrete points of the current simulated main working path and the current simulated supporting path are converted into robot motion instructions according to robotic syntax rules; and a simulation model of sheet deformation is built with LS Dyna simulation software, simulated forming is performed according to the robot motion instructions, and a simulated formed curved surface corresponding to the current simulated main working path and a spring-back value of the simulated formed curved surface are returned.

Next, a deviation value of the simulated formed curved surface from the target curved surface is taken as a state vector and inputted into the deep reinforcement learning model for reinforcement learning of the supporting strategy, and a simulated supporting path corresponding to the next simulated main working path and a current return value are updated in conjunction with the spring-back value of the simulated formed curved surface. Optionally, second reference points on the simulated formed curved surface corresponding to first reference points on the target curved surface is acquired respectively, and error values of each second reference point from each corresponding first reference point are calculated to form the state vector; the state vector is inputted into the deep reinforcement learning model for reinforcement learning of the supporting strategy, and a simulated supporting path corresponding to the next simulated main working path is outputted; and the current return value is updated according to the simulated formed curved surface and the spring-back value of the simulated formed curved surface. An initial value of the current return value is set to 0, and the current return value is controlled to be decreased by a first preset value if the spring-back value of the simulated formed curved surface is greater than or equal to a reference value; the current return value is controlled to be increased by the first preset value if the spring-back value of the simulated formed curved surface is smaller than the reference value; and the current return value is controlled to be a second preset value, if the forming of the simulated formed curved surface fails. Wherein, the reference value, the first preset value and the second preset value may be set as required. Preferably, the reference value is 10%, the first preset value is 0.1, and the second reference value is -1.0.

Finally, the current simulated main working path and the current simulated supporting path are cyclically updated respectively according to the next simulated main working path and the corresponding simulated supporting path, the robot arms are cyclically controlled to perform incremental forming according to the updated current simulated main working path and the updated current simulated supporting path, and the simulated formed curved surface is cyclically updated; and the state vector is cyclically updated according to the updated simulated formed curved surface and the target curved surface, and the model parameters of the deep reinforcement learning model are adjusted according to the updated state vector and the return value, till a convergence condition of the deep reinforcement learning model is met. The convergence condition may be that a preset number of training is reached, or the error between the formed curved surface and the target curved surface reaches or is smaller than a target value. Thus, a trained deep reinforcement learning model is obtained for incremental forming in a real environment.

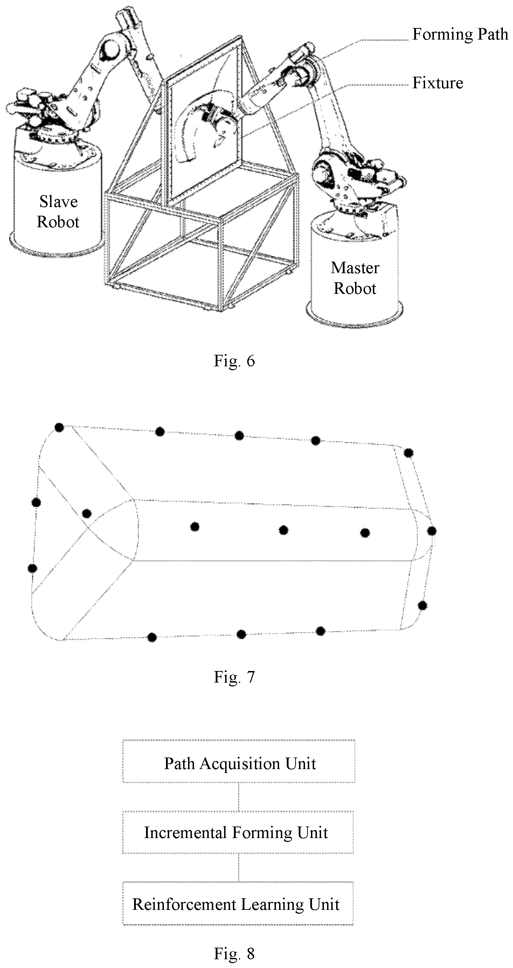

After a pre-trained deep reinforcement learning model is obtained, in the step S12, the robot arms of the master robot and the slave robot are respectively controlled to perform incremental forming in the actual application environment according to the current main working path and the current supporting path, and a formed curved surface corresponding to the current main working path is obtained. Specifically, as shown in Fig. 6, the metal sheet is fixed by fixtures, the robot arm of the master robot is controlled to travel along the current main working path, and the robot arm of the slave robot is controlled to travel along the current supporting path, so as to complete the incremental forming in the actual application environment and obtain a formed curved surface corresponding to the current main working path. **In** the process of incremental forming, concave shapes and convex shapes can be formed in the same part by exchanging the master and slave roles of the master robot and the slave robot. The forming path is consistent with the main working path, and when the master robot performs the forming work, the metal sheet is gradually deformed plastically and locally along the main working path of the forming tool head.

Step S13: taking a deviation value of the formed curved surface from a target curved surface as a state vector, applying a pre-trained deep reinforcement learning model for reinforcement learning of a supporting strategy, cyclically outputting a supporting path corresponding to the next main working path, and cyclically updating the current main working path and the current supporting path according to the next main working path and the supporting path corresponding to the next main working path till incremental forming of the three-dimensional model is completed.

In examples of the present invention, a deviation value of the formed curved surface from the target curved surface is taken as a state vector and inputted into the deep reinforcement learning model for reinforcement learning of the supporting strategy, and a supporting path corresponding to the next main working path is outputted. In the step S12, a spring-back value of the formed curved surface is also obtained, and, in the process of reinforcement learning, the current return value is updated according to the formed curved surface and the spring-back value of the formed curved surface. Optionally, the target curved surface is provided with a third preset number of first reference points. After the formed curved surface is obtained, a third preset number of second reference points in one-to-one correspondence with the respective first reference points are set correspondingly on the formed curved surface, and the error values of each second reference point from each corresponding first reference point are calculated to form a state vector. For example, as shown in Fig. 7, 16 second reference points are set on the formed curved surface, and the 16 second reference points are evenly distributed on the formed curved surface, and correspond one-to-one to 16 first reference points on the target curved surface. The state vector generated correspondingly is S: {d1; d2; ...; d15; d16}. The state vector is inputted into the deep reinforcement learning model for reinforcement learning of the supporting strategy, and a supporting path corresponding to the next main working path is outputted, so that incremental forming of the next formed curved surface can be subsequently performed.

After a supporting path corresponding to the next main working path is outputted through the reinforcement learning of the supporting strategy with the deep reinforcement learning model, the current main working path and the current supporting path are updated according to the next main working path and the supporting path corresponding to the next main working path. That is to say, the current main working path is updated into a next main working path, and the current supporting path is updated into a supporting path corresponding to the next main working path. Then back to the step S12, the robot arms are cyclically controlled to perform incremental forming according to the updated current main working path and the updated current supporting path, to generate a new formed curved surface. That cycle is repeated, till the incremental forming of the three-dimensional model is completed.

In examples of the present invention, after the robot arms are controlled to perform incremental forming in a real environment with the trained deep reinforcement learning model, the forming result may be digitized with a 3D scanner, and an error may be calculated, and the model parameters of the deep reinforcement learning model can be further adjusted according to the calculated error.

In terms of hardware, the double-point incremental forming manufacturing method based on deep reinforcement learning in the examples of the present invention employs two robots (e.g., KR-210) that cooperate with each other; the master robot performs the forming work to gradually produce local plastic deformations in the metal sheet along the tooling path direction; the slave robot is provided with four supporting strategies, and a supporting path corresponding to one of the supporting strategies is adjusted and selected in each step by the deep reinforcement learning model, wherein a step is accomplished whenever the forming tool head of the master robot completes the travel along a path. In the training stage, firstly, a digital simulation environment is established, and a deep neural network is built up. The deep neural network outputs a supporting strategy of the slave robot according to the error value between the formed curved surface and the target curved surface in the simulation environment, and the parameters of the deep neural network are optimized according to the effect of the supporting strategy. The task is finished if the robot finally completes the entire path and the error of the formed part meets the target requirements. The double-point incremental forming manufacturing method based on deep reinforcement learning in the examples of the present invention has high real-time performance and high flexibility, and can effectively improve the precision of the formed part and reduce the experimental cost.

In the double-point incremental forming manufacturing method based on deep reinforcement learning of the examples of the present invention, a three-dimensional model to be manufactured is acquired, the three-dimensional model is layered to obtain a plurality of main working paths and a plurality of candidate supporting paths corresponding to each of the main working paths, and an initial main working path and one supporting path corresponding to the initial main working path are selected as an initial current main working path and a current supporting path according to forming direction; the robot arms of a master robot and a slave robot are cyclically controlled for incremental forming in an actual application environment respectively, according to the current main working path and the selected current supporting path, to acquire a formed curved surface corresponding to the current main working path; and a deviation value of the formed curved surface from a target curved surface is taken as a state vector, a pre-trained deep reinforcement learning model is applied for reinforcement learning of a supporting strategy, a supporting path corresponding to the next main working path is cyclically outputted, and the current main working path and the current supporting path are cyclically updated according to the next main working path and the supporting path corresponding to the next main working path till incremental forming of the three-dimensional model is completed. Thus the supporting strategy of a slave robot can be adjusted, resulting in high flexibility and high forming accuracy.

Some specific examples of the present invention are described above. In some cases, the actions or steps mentioned in the examples of the present invention may be performed in an order different from that in the examples and still can achieve the desired results. In addition, the processes depicted in the accompanying drawings may not necessarily require the illustrated specific order or sequential order to achieve the desired results. In certain examples, multi-task processing and parallel processing are also possible or may be advantageous.

Based on the same inventive concept, an example of the present invention further provides a double-point incremental forming manufacturing apparatus based on deep reinforcement learning. As shown in Fig. 8, the double-point incremental forming manufacturing apparatus based on deep reinforcement learning comprises: a path acquisition unit, an incremental forming unit and a reinforcement learning unit. Wherein:
the path acquisition unit is configured for acquiring a three-dimensional model to be manufactured, layering the three-dimensional model to obtain a plurality of main working paths and a plurality of candidate supporting paths corresponding to each of the main working paths, and selecting an initial main working path and one supporting path corresponding to the initial main working path as an initial current main working path and a current supporting path according to forming direction;
the incremental forming unit is configured for cyclically controlling robot arms of a master robot and a slave robot for incremental forming in an actual application environment respectively, according to the current main working path and the current supporting path, to acquire a formed curved surface corresponding to the current main working path; and
the reinforcement learning unit is configured for taking a deviation value of the formed curved surface from a target curved surface as a state vector, applying a pre-trained deep reinforcement learning model for reinforcement learning of a supporting strategy, cyclically outputting a supporting path corresponding to the next main working path, and cyclically updating the current main working path and the current supporting path according to the next main working path and the supporting path corresponding to the next main working path till incremental forming of the three-dimensional model is completed.

For the convenience of description, the above apparatus is divided into modules according to function and the modules are described separately. Of course, in the implementation of examples of the present invention, the functions of the modules may be implemented in the same one or several software and/or hardware.

The apparatus of the above examples is applied to the corresponding method in the above examples, and has the beneficial effects achieved by the corresponding method embodiment, which will not be described in detail here.

Based on the same inventive concept, an example of the present invention further provides an electronic device, which comprises a memory unit, a processor and a computer program stored in the memory unit and executable on the processor, wherein the processor implements the method described in any one of the above examples when it executes the program.

An example of the present invention provides a nonvolatile computer storage medium storing at least one executable instruction, which can execute the method described in any one of the above examples.

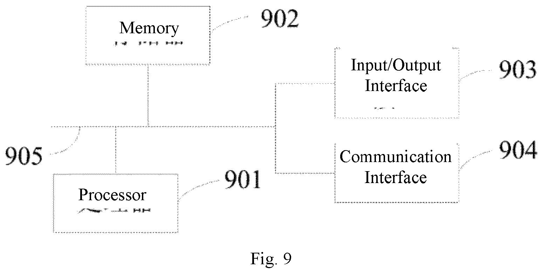

Fig. 9 shows a more specific schematic structural diagram of the hardware of an electronic device provided in this example. The device may comprise: a processor 901, a memory 902, an input/output interface 903, a communication interface 904 and a bus 905, wherein communication connections between the processor 901, the memory 902, the input/output interface 903 and the communication interface 904 inside the device are implemented via the bus 905.

The processor 901 may be implemented with a general-purpose central processing unit (CPU), a microprocessor, an application specific integrated circuit (ASIC), or one or more integrated circuits, etc., and is used for executing related programs, to implement the technical scheme provided in the method example of the present invention.

The memory 902 may be implemented in the form of read-only memory (ROM), random access memory (RAM), static memory, or dynamic memory, etc. The memory 902 can store an operating system and other application programs. When the technical scheme provided in the method example of the present invention is implemented in software or firmware, related program codes are stored in the memory902, and invoked and executed by the processor 901.

The input/output interface 903 is used to connect input/output modules, to realize information input and output. The input/output modules may be provided as components in the device (not shown in the figure), or may be externally connected to the device to provide corresponding functions. Input devices may include keyboards, mouses, touch screens, microphones, and various sensors, etc.; the output devices may include display screens, speakers, vibrators, and indicator light, etc..

The communication interface 904 is used to connect a communication module (not shown in the figure), to realize communication interaction between the present device and other devices. The communication module may communicate in a wired manner (e.g., USB, or network cable, etc.) or a wireless manner (e.g., mobile network, WIFI, or Bluetooth, etc.).

The bus 905 includes a passage, for transferring information between various components of the device (e.g., the processor 901, the memory 902, the input/output interface 903 and the communication interface 904).

It should be noted that, although the above device is shown only with the processor 901, the memory 902, the input/output interface 903, the communication interface 904 and the bus 905, the device may further include other components necessary for normal operation in the specific implementation process. In addition, as can be understood by those skilled in the art, the above-mentioned device may include only the components necessary to implement the scheme of the example of the present invention, without necessarily including all the components shown in the figures.

Those having ordinary skills in the art should understand: the discussion of any of the above examples is only exemplary, and not intended to imply that the scope of the present application is limited to those examples; based on the concept of the present application, the technical features in the above examples or different examples may be combined, the steps may be implemented in any order, and many other variations may be made in different aspects of the present application as described above, but are not provided herein in details for conciseness.

The present application is intended to encompass all replacements, modifications and variations that fall in the broad scope of the examples of the present invention. Therefore, any omission, modification, equivalent replacement, or improvement made to the examples without departing from the spirit and the principle of the examples of present invention shall be deemed as falling in the scope of protection of the present application.

## Claims

1. A double-point incremental forming manufacturing method based on deep reinforcement learning, **characterized in that**, the method comprises:
acquiring a three-dimensional model to be manufactured, layering the three-dimensional model to obtain a plurality of main working paths and a plurality of candidate supporting paths corresponding to each of the main working paths, and selecting an initial main working path and one supporting path corresponding to the initial main working path as an initial current main working path and a current supporting path according to forming direction;
cyclically controlling robot arms of a master robot and a slave robot for incremental forming in an actual application environment respectively, according to the current main working path and the selected current supporting path, to acquire a formed curved surface corresponding to the current main working path; and
taking a deviation value of the formed curved surface from a target curved surface as a state vector, applying a pre-trained deep reinforcement learning model for reinforcement learning of a supporting strategy, cyclically outputting a supporting path corresponding to the next main working path, and cyclically updating the current main working path and the current supporting path according to the next main working path and the supporting path corresponding to the next main working path till incremental forming of the three-dimensional model is completed.

2. The method of claim 1, **characterized in that**, the step of acquiring a three-dimensional model to be manufactured, layering the three-dimensional model to obtain a plurality of main working paths and a plurality of candidate supporting paths corresponding to each of the main working paths comprises:
acquiring a three-dimensional model to be manufactured, layering the three-dimensional model in the forming direction according to a preset layer thickness by applying an offset-on-curved-surface function, and acquiring a first preset number of curve paths;
dividing a second preset number of discrete points at a preset point interval for each curve path, and generating a main working path corresponding to the curve path according to the discrete points;
acquiring a plurality of candidate supporting paths corresponding to the main working path according to a plurality of supporting strategies for each main working path respectively, wherein the supporting strategy is one of a global supporting strategy, a local peripheral supporting strategy, a local front supporting strategy and a following supporting strategy.

3. The method of claim 1, **characterized in that**, before the step of controlling the robot arms for incremental forming in a real environment according to the current main working path and the selected current supporting path to acquire a formed curved surface corresponding to the current main working path, said method comprises:
constructing a digital simulation environment that matches the actual application environment of the three-dimensional model to be manufactured in Grasshopper; and
simulating the three-dimensional model in the digital simulation environment, and training the deep reinforcement learning model in conjunction with a simulation result, to obtain the pre-trained deep reinforcement learning model.

4. The method of claim 3, **characterized in that**, the step of simulating the three-dimensional model in the digital simulation environment and training the deep reinforcement learning model in conjunction with a simulation result to obtain the pre-trained deep reinforcement learning model comprises:
selecting an initial main working path as a current simulated main working path according to the forming direction, and randomly selecting one of a plurality of candidate supporting paths as an initial current simulated supporting path according to the current simulated main working path;
applying the digital simulation environment for simulated forming according to the current simulated main working path and the current simulated supporting path, to obtain a simulated formed curved surface corresponding to the current simulated main working path and a spring-back value of the simulated formed curved surface;
taking a deviation value of the simulated formed curved surface from the target curved surface as a state vector, and inputting it into the deep reinforcement learning model for reinforcement learning of the supporting strategy, and updating a simulated supporting path corresponding to the next simulated main working path and a current return value in conjunction with the spring-back value of the simulated formed curved surface;
cyclically updating the current simulated main working path and the current simulated supporting path respectively according to the next simulated main working path and the corresponding simulated supporting path, cyclically controlling the robot arms to perform incremental forming according to the updated current simulated main working path and the updated current simulated supporting path, and cyclically updating the simulated formed curved surface; and
cyclically updating the state vector according to the updated simulated formed curved surface and the target curved surface, and adjusting the model parameters of the deep reinforcement learning model according to the updated state vector and the return value, till a convergence condition of the deep reinforcement learning model is met.

5. The method of claim 4, **characterized in that**, the step of applying the digital simulation environment for simulated forming according to the current simulated main working path and the current simulated supporting path to obtain a simulated formed curved surface corresponding to the current simulated main working path and a spring-back value of the simulated formed curved surface comprises:
converting coordinates and directions of discrete points of the current simulated main working path and the current simulated supporting path into robot motion instructions according to robotic syntax rules; and
building a simulation model of sheet deformation with simulation software, performing simulated forming according to the robot motion instructions, and returning a simulated formed curved surface corresponding to the current simulated main working path and a spring-back value of the simulated formed curved surface.

6. The method of claim 4, **characterized in that**, the step of taking a deviation value of the simulated formed curved surface from the target curved surface as a state vector, and inputting it into the deep reinforcement learning model for reinforcement learning of the supporting strategy, and updating a simulated supporting path corresponding to the next simulated main working path and a current return value in conjunction with the spring-back value of the simulated formed curved surface comprises:
acquiring second reference points on the simulated formed curved surface corresponding to first reference points on the target curved surface respectively, and calculating error values of each second reference point from each corresponding first reference point to form the state vector;
inputting the state vector into the deep reinforcement learning model for reinforcement learning of the supporting strategy, and outputting a simulated supporting path corresponding to the next simulated main working path; and
updating the current return value according to the simulated formed curved surface and the spring-back value of the simulated formed curved surface.

7. The method of claim 6, **characterized in that**, the step of updating the current return value according to the simulated formed curved surface and the spring-back value of the simulated formed curved surface comprises:
setting an initial value of the current return value to 0, and controlling the current return value to be decreased by a first preset value if the spring-back value of the simulated formed curved surface is greater than or equal to a reference value;
controlling the current return value to be increased by the first preset value if the spring-back value of the simulated formed curved surface is smaller than the reference value; and
controlling the current return value to be a second preset value if the forming of the simulated formed curved surface fails.

8. A double-point incremental forming manufacturing apparatus based on deep reinforcement learning, **characterized in that**, the apparatus comprises:
a path acquisition unit, configured for acquiring a three-dimensional model to be manufactured, layering the three-dimensional model to obtain a plurality of main working paths and a plurality of candidate supporting paths corresponding to each of the main working paths, and selecting an initial main working path and one supporting path corresponding to the initial main working path as an initial current main working path and a current supporting path according to forming direction;
an incremental forming unit, configured for cyclically controlling robot arms of a master robot and a slave robot for incremental forming in an actual application environment respectively according to the current main working path and the current supporting path, to acquire a formed curved surface corresponding to the current main working path; and
a reinforcement learning unit, configured for taking a deviation value of the formed curved surface from a target curved surface as a state vector, applying a pre-trained deep reinforcement learning model for reinforcement learning of a supporting strategy, cyclically outputting a supporting path corresponding to the next main working path, and cyclically updating the current main working path and the current supporting path according to the next main working path and the supporting path corresponding to the next main working path till incremental forming of the three-dimensional model is completed.

9. An electronic device, comprising a memory, a processor, and a computer program stored in the memory and executable on the processor, **characterized in that**, the processor implements the method of any one of claims 1-7 when it executes the computer program.

10. A computer storage medium, **characterized in that**, the storage medium stores at least one executable instruction, which instructs a processor to execute the method of any one of claims 1-7.
